# NEUE EUROPÄISCHE PATENTSCHRIFT

(11) **EP 0 199 916 B2**
(45) Veröffentlichungstag und Bekanntmachung des Hinweises auf die Entscheidung über den Einspruch: **03.12.1997**
(45) Hinweis auf die Patenterteilung: 07.08.1991
(21) Anmeldenummer: 86102105.3
(22) Anmeldetag: 18.02.1986
(51) Int. Cl.: B60K 37/00, H05K 11/02

(54) **Zentrale Bedienungsein- und Informationsausgabe für Zusatzgeräte von Fahrzeugen**
Centralized command input and information output unit for auxiliary equipment of vehicles
Unité centralisée d'entrée de commandes et de sortie d'informations pour des équipements auxiliaires de véhicules

(30) Priorität: 20.04.1985 DE 3514438
(43) Veröffentlichungstag der Anmeldung: 10.12.1986
(73) Patentinhaber: Dr.Ing.h.c. F. Porsche Aktiengesellschaft, 70435 Stuttgart (DE)
(72) Erfinder: Ehniss, Roland, Dipl.-Ing. (FH), D-7500 Karlsruhe 41 (DE); Marx, Dieter, Dr. Dipl.-Phys., D-7053 Kernen (DE); Schäfer, Peter, Dipl.-Ing. (FH), D-7251 Mönsheim (DE)
(74) Vertreter: Friedmann, Jürgen, Dr.-Ing.

(56) Entgegenhaltungen:
- EP-A- 0 025 763
- EP-A- 0 122 043
- DE-A- 3 104 668
- DE-B- 2 929 047
- FR-A- 2 510 783
- FR-A- 2 519 832
- "Autokatalog" 28.Jahrgang, Stand: 01.09.1984, Seiten 264,265, (Vereinigte Motor-Verlage, Stuttgart)
- "Bildschirmsysteme für Prozesswarten": Regelungstechnische Praxis 1978, Heft 3, Seiten 77-83.

## Beschreibung

Die Erfindung betrifft eine Vorrichtung nach der Gattungides Hauptanspruchs.

Insbesondere bei Kraftfahrzeugen werden immer häufiger Zusatzgeräte im Armaturenbrettbereich bzw. der Mittelkonsole eingebaut, wie z. B. Radios, Bordcomputer, Sitzpositioniersteuergeräte, usw.; dies nicht zuletzt, um den Fahrkomfort oder die Fahrsicherheit zu verbessern. Die Vielzahl von Geräten mit ihren separaten Bedienungselementen sind an einem Armaturenbrett gegebener Größe schwerlich unterbringbar. Als Folge davon müssen die Bedienelemente klein gehalten werden, was oft zu einer verwirrenden Vielfalt von Bedienknöpfen, -tasten und Schaltern oft gleichartigen oder ähnlichen Aufbaus führt. Ein Fahrer des Kraftfahrzeuges ist damit kaum imstande, das richtige Bedienelement am richtigen Gerät zu betätigen, ohne seine Aufmerksamkeit vom Verkenrsgescheben abzulenken.

Aus der DE-A- 31 04 668 ist ein Multifunktionsbedienteil bekannt, das die geschilderte Problematik zumindest mildert. Mehrere Zusatzgeräte werden lediglich durch ein Bedienteil gesteuert, das dazu eine Zifferneingabe, eine Funktionsgruppenumschaltung, Bedienelemente und eine Anzeigeeinheit sowie eine Schnittstelle für eine Elektronikeinheit aufweist. Die Bedienelemente werden hierzu über die Funktionsgruppenumschaltung einem bestimmten Gerät zugewiesen. Nachteilig daran ist die ungenügende ergonomische Gestaltung des Geräts, dessen Aufbau aus der Rechnertechnik entlehnt ist. Mit einer derartigen Technologie dürfte der durchschnittliche Fahrer eines Kraftfahrzeuges überfordert sein. Dieses Ausführungsbeispiel weist darüber hinaus ungenügende Flexibilität bezüglich der Anzeige und eine relativ schlechte Zuordnung der Bedienelemente zur Anzeige auf.

Ein Informationssystem mit einer Anzeigeeinheit, deren Anzeige zur Darstellung von Informationen und Funktionsauswahltabellen (Menus) untergliederbar ist, geht aus 'Autokatalog, 28. Jahrgang 1984/85, Stand: 01.09.1984, Vereinigte Motor-Verlage GmbH & CoKG, Stuttgart, Seiten 264 u. 265', hervor und stellt eine geradlinige Übertragung der aus der Prozeßrechentechnik (siehe z. B. Regelungstechnische Praxis 1978, Heft 3, Seite 77 - 83 und 1980, Heft 9, Seite 302 bis 309) bereits bekannten Multifunktionsbedien- und - Anzeigesysteme auf der Basis von Bildschirmgeräten dar. Es weist Bedientasten auf, die den Elementen dargestellter Menus eindeutig zugeordnet sind. Die Elemente geben dabei Funktionen an, die durch die entsprechenden Bedientasten anregbar sind. Die einzelnen Menus, die jeweils ein bestimmtes Zusatzgerät bedienen, sind über ein Grundmenu anwählbar.

Aus der Veröffentlichung G. Nirschl und G. Geiser 'Method and Module for an ergonomic and economical Design of Man-Machine Dialogues', in Proc. of the 4th European annual Manual European Conference on Human Decision Making and Manual Control, Suesterberg/Niederlande vom 28. bis 30. Mai 1984, ist eine Menüsteuerung beispielsweise für einen Logic Analyzer bekannt, bei der im Bedarfsfall zusätzliche Tasten vorgesehen sind, um einen direkten Zugriff zu bestimmten Basisfunktionen bereitzustellen. Mit diesen speziellen Tasten kann unabhängig von der Menübedienung eine vorgegebene Grundfunktion aufgerufen werden. Zwar stellt dieses Verfahren eine gewisse Vereinfachung in der Bedienung von komplexen Geräten dar, es ist jedoch nicht möglich, die vorgesehenen Funktionstasten nach individuellen Wünschen zu programmieren.

Damit sind zwar die oben genannten Nachteile der ungenügenden Flexibilität der Anzeige bzw. der schlechten Zuordnung der Bedienelemente zur Anzeige beseitigt; die ergonomische Gestaltung ist aber immer noch nicht optimal, da prinzipiell alle Bedienfunktionen über die Menus abgewickelt werden müssen und bei der Bedienung wichtiger oder öfter zu betätigender Bedienelemente jedesmal über das Grundmenu das entsprechende Gerätemenu angewählt werden muß.

Es ist daher Aufgabe der Erfindung, eine Vorrichtung zur zentralen Bedienungsein- und Informationsausgabe für Zusatzgeräte von Fahrzeugen zu schaffen, das ergonomisch günstig gestaltet, sinnvoll und einfach bedienbar ist und einen guten räumlichen Aufbau aufweist.

Die Aufgabe der Erfindung wird durch die kennzeichnenden Merkmale des Anspruchs 1 gelöst. Weitere, die Erfindung ausgestaltende Merkmale sind in den Unteransprüchen enthalten.

Die Vorteile der Erfindung sind in erster Linie darin zu sehen, daß durch eine 'Auslagerung' relevanter, jederzeit eine direkte Betätigung erfordernder Bedienfunktionen aus der Menutechnik, eine Vorrichtung zur zentralen Bedienungsein- und Informationsausgabe geschaffen ist, die ergonomisch günstig gestaltet sinnvoll und einfach bedienbar ist und einen guten räumlichen Aufbau aufweist. Sie gewährleistet zudem ein hohes Maß an Sicherheit durch vereinfachte Bedienerführung und geringstmöglicher Ablenkung des Fahrers vom Verkehrsgeschehen und ermöglicht ihm umfangreiche Informationen über den aktuellen Zustand seines Fahrzeuges und des Verkehrsgeschehens.

Die Erfindung wird anhand von in den Zeichnungen dargestellten Beispielen nachstehend näher erläutert.
Es zeigt
- Fig. 1: eine Frontansicht einer zentralen Bedienungsein- und Informationsausgabe zur Steuerung von mehreren in ein Fahrzeug eingebauten Zusatzgeräten nach der Erfindung,
- Fig. 2: ein elektrisches Prinzipschaltbild der Ausführung gemäß Fig. 1,
- Fig. 3: ein Beispiel für ein auf einer Anzeige dargestelltes Grundmenu und eine Belegung der Bedienelemente,
- Fig. 4: ein Beispiel nach Fig. 3, jedoch für ein Radiomenu,
- Fig. 5: ein Beispiel nach Fig. 3, jedoch für ein persönliches Menu,
- Fig. 6: ein Beispiel nach Fig. 3, jedoch für ein Betriebsdatenmenu,
- Fig. 7: eine Frontansicht eines weiteren Ausführungsbeispiels einer zentralen Bedienungsein- und Informationsausgabe, bei der Bedientasten als Berührungstasten auf einer Anzeige realisiert sind,
- Fig. 8: ein Beispiel für ein auf der Anzeige nach Fig. 7 dargestelltes Grundmenu,
- Fig. 9: ein Beispiel nach Fig. 8, jedoch für ein Positioniermenu.

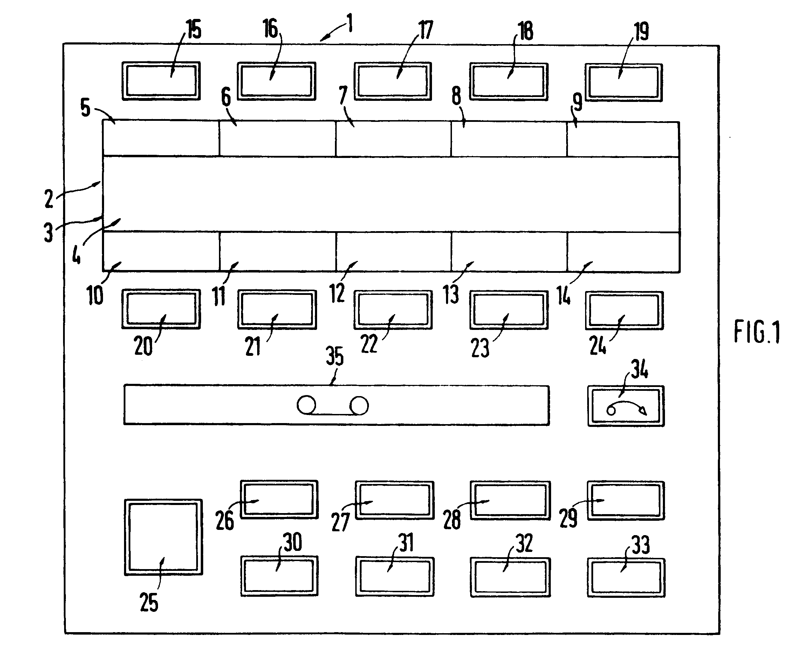

In Fig. 1 ist mit 1 eine zentrale Bedienungsein- und Informationsausgabe in einer Frontansicht gezeigt, die zur Steuerung von mehreren in ein Fahrzeug eingebauten Zusatzgeräten dient. Eine Anzeige 2 einer Anzeigeeinheit 3 ist in Felder zur Darstellung von Informationen (Informationsfeld 4) und Funktionsauswahltabellen, nachfolgend Menus genannt (Menufeld 5 bis 14), unterteilt.

Bedientasten 15 bis 24 sind den Menufeldern 5 bis 14 bzw. den darauf abgebildeten Elmenten eindeutig zugeordnet. Die Elemente geben dabei die Funktionen an, die durch die jeweiligen Bedientasten 15 bis 24 anregbar sind.

Nach der Erfindung umfaßt das System zusätzliche Bedienelemente 25 bis 34, die einen direkten Zugriff zu bestimmten Grundfunktionen der Bedienungsein- und Informationsausgabe 1 bzw. der daran angeschlossenen Zusatzgeräte erlauben.

Durch eine Unterteilung der Menufelder in zehn einzelne Felder und die zusätzlichen Bedienelemente für die Grundfunktionen ergibt sich ein ergonomisch günstig gestaltetes System zur Steuerung der Funktionen von Zusatzgeräten, wie z. B. einem Rundfunkempfänger, einem Kompakt-Kassettengerät 35, einem Kompakt-Diskspieler, einem Bordrechner, einem Diagnosegerät, einem Positioniersteuergerät, einer Diebstahlsicherungsanlage, einem Service-Intervallrechner, einem Navigationsgerät, einem Zeitsteuer- und Zeitanzeigegerät, einem Autotelefon, einem Sprachausgabesystem und einem Klimasteuergerät bzw. einer beliebigen Kombination aus einzelnen dieser Geräte.

Das Kompakt-Kassettengerät 35 oder der Kompakt-Diskspieler kann darüber hinaus im System untergebracht sein. Er sorgt so, zusammen mit dem benachbart angeordneten Grundfunktionsbedienelement Kassettenauswurf 34 für eine gute Untergliederung des Systems.

Mit einem Einstecken einer Kompaktkassette oder einer Kompaktdisk bzw. einem Drücken des Kassettenauswurfs 34 oder des Diskauswurfs erfolgt hierbei ein automatisches Umschalten von einem Rundfunkempfang auf eine Kassetten- oder Diskwiedergabe und umgekehrt.

Einerseits ergibt sich dadurch eine drastische Verminderung von Bedieneinheiten bzw. - elementen für die einzelnen Zusatzgeräte Andererseits ermöglicht das System eine einfache und übersichtliche Bedienung, nicht zuletzt dadurch, daß bestimmte Grundfunktionen des Systems bzw. der Zusatzgeräte, die einen jederzeit möglichen, unabhängigen Zugriff erfordern, aus der Menutechnik des Systems ausgelagert sind.

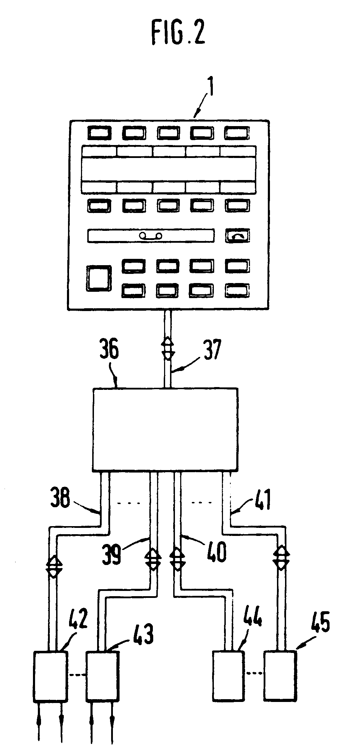

Anhand des in Fig. 2 dargestellten elektrischen Prinzipschaltbilds ist ein funktioneller Aufbau des Systems gezeigt. Das zentrale Bedienungsein- und Informationsausgabesystem 1 ist vorzugsweise auf der Basis eines zentralen Steuerrechners (Mikrorechner) 36 aufgebaut, mit dem die Bedientasten 15 bis 24 und -elemente 25 bis 34 und die Anzeigeeinheit 3 über Leitungen (Ein-, Ausgabe) 37 verbunden sind. Über einen Gerätebus 38 bis 41 sind zu steuernde Zusatzgeräte 42 bis 45 an den Mikrorechner 36 angeschlossen; der Gerätebus kann hierbei als Stern-, Ring-oder Stichbus ausgeführt sein.

Bei den Zusatzgeräten 42 bis 45 kann es sich sowohl um Geräte 42, 43 handeln, an denen weitere Untergeräte (z. B. Sensoren) angeschlossen sind oder um Endgeräte 44, 45, die keiner Peripherie bedürfen. Sie können selbstverständlich auch selbst Mikrorechner enthalten. Ebenso ist es denkbar, daß der Steuerrechner 36 Aufgaben der Zusatzgeräte 42 bis 45 ganz oder teilweise mit übernimmt.

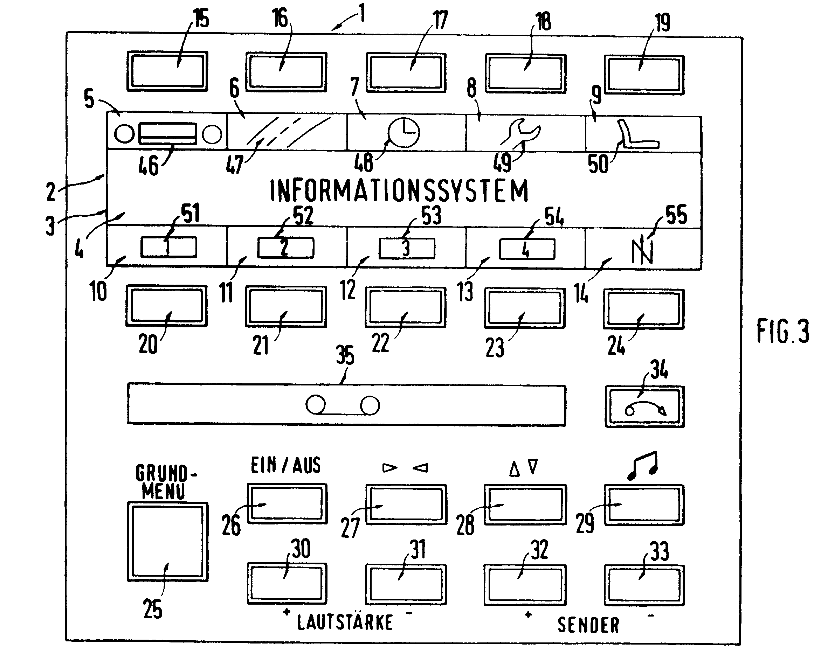

Die Funktion der Bedienungsein- und Informationsausgabe wird nun anhand der Fig. 3 bis 6 erklärt. Dabei ist auch eine mögliche Verteilung der Grundfunktionen auf die Bedienelemente 25 bis 34 gezeigt, die bei den Fig. 3 bis 6, 8 und 9 jeweils gleich ist.

Mit der besonders auffallend gestalteten Taste 25 kann jederzeit ein Grundmenu angewählt werden, über das mittels der Bedientasten 15 bis 24 die einzelnen zu bedienenden Geräte angesteuert bzw. deren Menus aufgerufen werden können. Mit dem Bedienelement 26 kann das Gesamtsystem und/oder das Radiogerät ein- bzw. ausgeschaltet werden. Die Bedienelemente 27 und 28 sind als Wipptasten ausgeführt und erlauben ein Verschieben eines räumlichen Klangbildes in Quer-(Balance) 27 bzw. in Längsrichtung (Überblendung) 28.

Über ein Bedienelement 29 kann eine Klangfunktion angewählt werden. Mit den Bedienelementen 30 und 31 läßt sich die Lautstärke einer Tonwiedergabe verstellen und mit den Bedienelementen 32 und 33 eine Empfangsfrequenz verstellen (Erhöhen bzw. Vermindern). Die Grundfunktionsbedienelemente können selbstverständlich auch auf andere Weise aufgeteilt oder angeordnet sein oder auch zusätzliche Elemente umfassen, wobei Lautstärke oder Senderverstellung auch als Drehknopf ausgeführt sein können; ebenso ist eine Mehrfachbelegung einzelner Bedienelemente denkbar.

Auf der Anzeige 2 ist als Beispiel ein Grundmenu dargestellt. Auf dem Informationsfeld 4 erscheint der Schriftzug 'Informationssystem'.

Die Menufelder können sowohl mit Symbolen für die zu bedienenden Geräte als auch mit Schriftzeichen belegt werden. Hier erscheint auf den Menufeldern:
5 ein Radiosymbol 46; 6 ein Fahrdatensymbol 47; 7 ein Zeitsymbol 48; 8 ein Betriebsdatensymbol 49; 9 ein Positioniersymbol 50; 10 ein erstes persönliches Menusymbol 51; 11 ein zweites persönliches Menusymbol 52; 12 ein drittes persönliches Menusymbol 53, 13 ein viertes persönliches Menusymbol 54; 14 ein Navigationssymbol 55.

Mit den zugehörigen Bedientasten 15 bis 24 lassen sich entsprechend ein Radiomenu, ein Fahrdatenmenu, ein Zeitmenu, ein Betriebsdatenmenu, ein Positioniermenu, ein erstes bis viertes persönliches Menu und ein Navigationsmenu zur Ansteuerung der entsprechenden Zusatzgeräte anwählen.

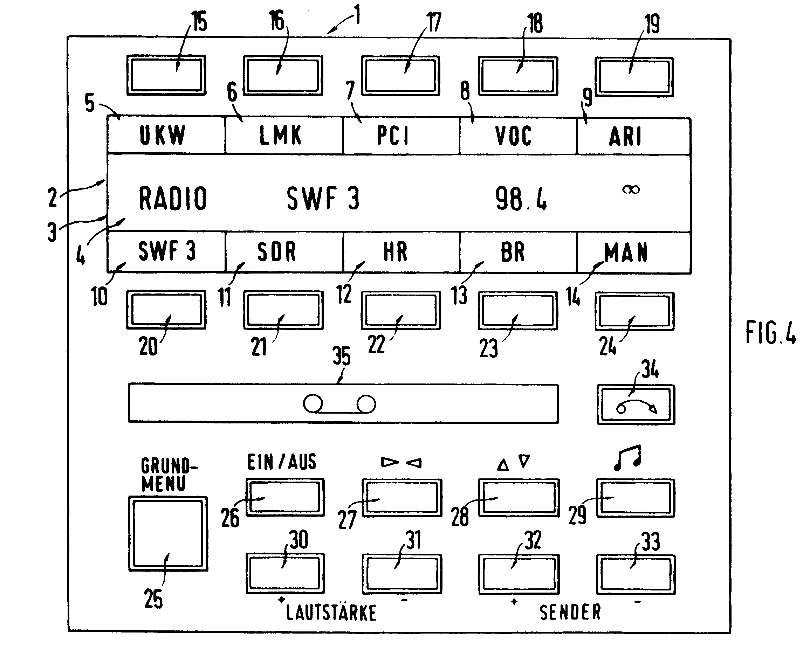

Wird im Grundmenu nach Fig. 3 die dem Radiosymbol 46 zugeordnete Bedientaste 15 gedrückt, so erscheint im Informationsfeld 4 ein Schriftzug 'Radio', ein angewählter Sender, ein angewähltes Programm, eine zugehörige Empfangsfrequenz sowie weitere Symbole, die z. B. einen Stereoempfang oder einen Verkehrsrundfunk kennzeichnen (Fig. 4).

Wellenbereiche können mit den Bedientasten 15 und 16 angewählt werden. Eine 'PCI' (Program Comparison and Identification) genannte Funktion (Bedientaste 17) erlaubt eine Identifikation von Sendeanstalten und Programmen nach ihren Frequenzen und Bereichskennungen sowie eine Auswahl ihrer augenblicklich besten Empfangsfrequenzen.

Wie es aus der Fig. ersichtlich ist, werden die Sendeanstalten in den Menufeldern 10 bis 13 angezeigt, wobei der Sender, der für einen Verkehrsrundfunk am augenblicklichen Fahrzeugstandort (Bereich) maßgeblich ist, am weitesten links (im Menufeld 10) steht. Durch ein einfaches Antippen einer der Bedientasten 20 bis 23 läßt sich die Sendeanstalt anwählen; durch mehrfaches Antippen einer dieser Bedientasten läßt sich dieses Programm verändern, wobei bei einem Wechsel der Sendeanstalt jeweils das zuletzt gewählte, zugehörige Programm eingestellt wird. Mit der Bedientaste 18 läßt sich eine Sprachausgabe (VOC) ein- bzw. abschalten, die die angewählte Sendeanstalt und deren Programm ansagt. Durch Drücken der Bedientaste 19 (ARI) läßt sich ein Empfang von Sendern, die keine Verkehrsdurchsagekennung aufweisen, unterdrücken. Mit der Bedientaste 24 schießlich läßt sich das Rundfunkempfangsgerät auf manuelle Abstimmung umschalten; die Bedientasten 20 bis 23 können dann als Stationstasten benützt werden.

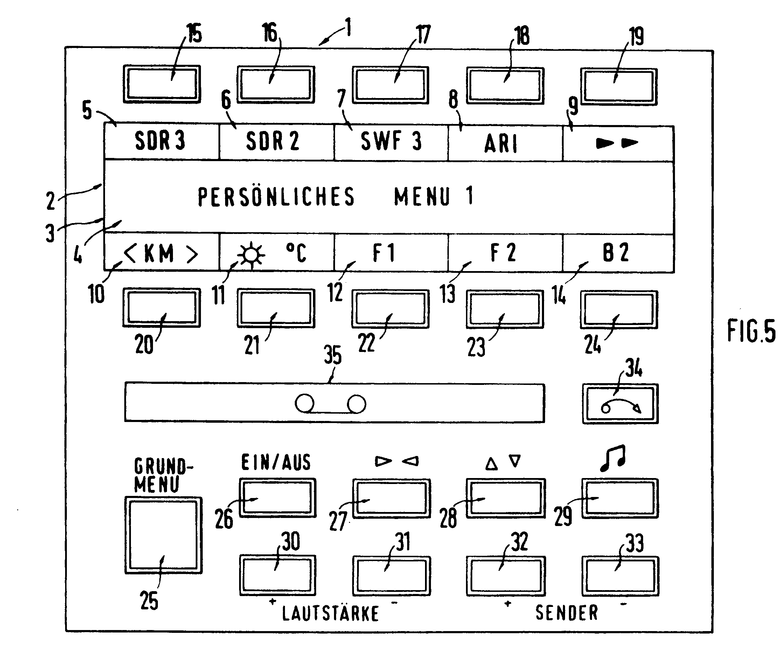

Als weiteres Beispiel ist in Fig. 5 ein erstes persönliches Menu dargestellt, das über die Bedientaste 20 des Grundmenus angewählt werden kann. Ein derartiges Menu kann sich eine Bedienperson individuell aus den Elementen aller Menus selbst erstellen; es wird damit möglich, daß über ein einziges Menu lediglich die Gerätefunktionen angewählt werden können, die für die Bedienperson von besonderem Interesse sind; hier beispielsweise die (Bedientaste in Klammern) Senderprogramme 'SDR 3' 15, 'SDR 2' 16, 'SWF 3' 17 sowie die Funktion 'ARI' 18 des Rundfunkgeräts, schneller Vorlauf 19 des Kompakt-Kassettengeräts 35, Tageskilometerzähler 20 und Außentemperatur 21 des Fahrdatenrechners, sowie Positionierungen, Fahrerseite, Stellung '1' 22, Fahrerseite, Stellung '2' 23 und Beifahrerseite Stellung '1' 24 des Positioniersteuergeräts.

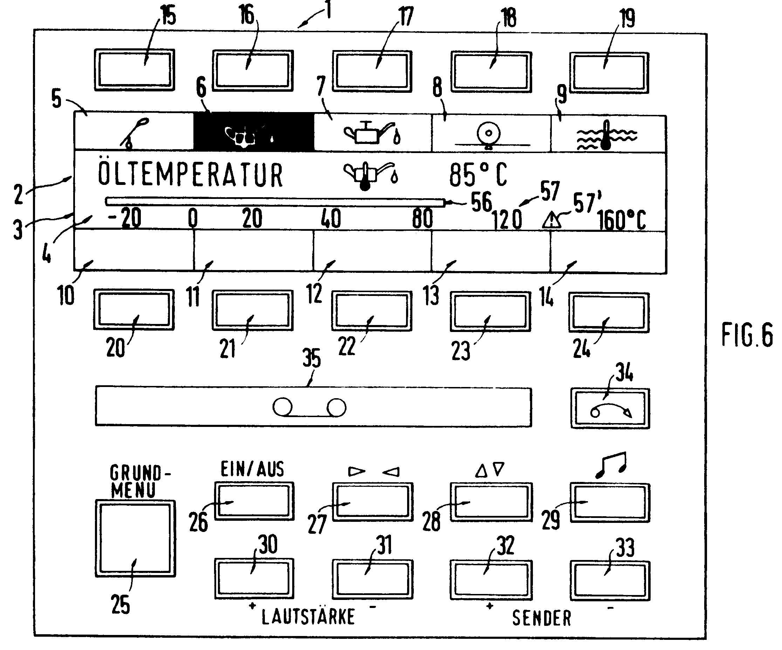

In Fig. 6 ist ergänzend ein Betriebsdatenmenu dargestellt, das über die Bedientaste 18 des Grundmenus anwählbar ist. Auf dem Informationsfeld erscheint zunächst der Schriftzug 'Betriebsdaten'. Nach Anwahl einer der Bedientasten Ölstand 15, Öltemperatur 16, Öldruck 17, Reifendruck 18 oder Wassertemperatur 19, hier z. B. der Bedientaste Öltemperatur 16 erscheint auf der Anzeige 2 ein Schriftzug 'Öltemperatur' und/oder ein entsprechendes Symbol und ein gemessener Wert, z. B. 85° C. Zusätzlich kann im unteren Teil des Informationsfeldes noch eine quasi-analoge Anzeige, z. B. in Form eines Balkendiagramms 56 über einer Skala 57, die mit einem Warnsymbol 57' ausgestattet sein kann, erfolgen.

Zusätzlich ist in der Fig. noch eine Möglichkeit einer Quittierungsanzeige nach erfolgter Tastenbetätigung (Bedientaste 16) gezeigt. Das entsprechende Menufeld ist hierbei im inversen Hell-Dunkel-Kontrast dargestellt. Es kann selbstverständlich auch durch Einrahmung, Unterstreichung oder eine andere Weise kenntlich gemacht werden.

Es ist ferner vorgesehen, daß bei Überschreiten eines kritischen Betriebsdatengrenzwerts die Anzeige automatisch auf das Betriebsdatenmenu wechselt, den kritischen Betriebsparameter anzeigt und besonders kenntlich macht (Blinken etc).

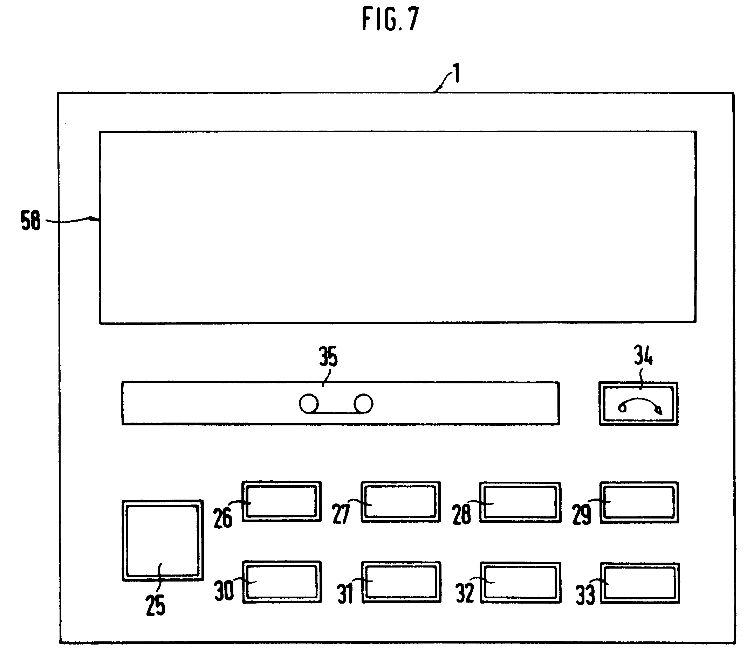

Ein weiteres Ausführungsbeispiel einer zentralen Bedienungseinund Informationsausgabe ist in Fig. 7 bis 9 gezeigt, wobei Teile, die mit den in den vorhergehenden Fig. gezeigten identisch sind, gleiche Bezugszahlen aufweisen.

Dieses System weist hierbei ein berührungsempfindliches Display (Bildschirm) 58 auf, bei dem ein Ort der Berührung auf seiner Oberfläche lokalisiert werden kann ('touch screen'), so daß die Bedientasten als virtuelle Berührungstasten bzw. -felder auf dem Bildschirm individuell darstellbar sind.

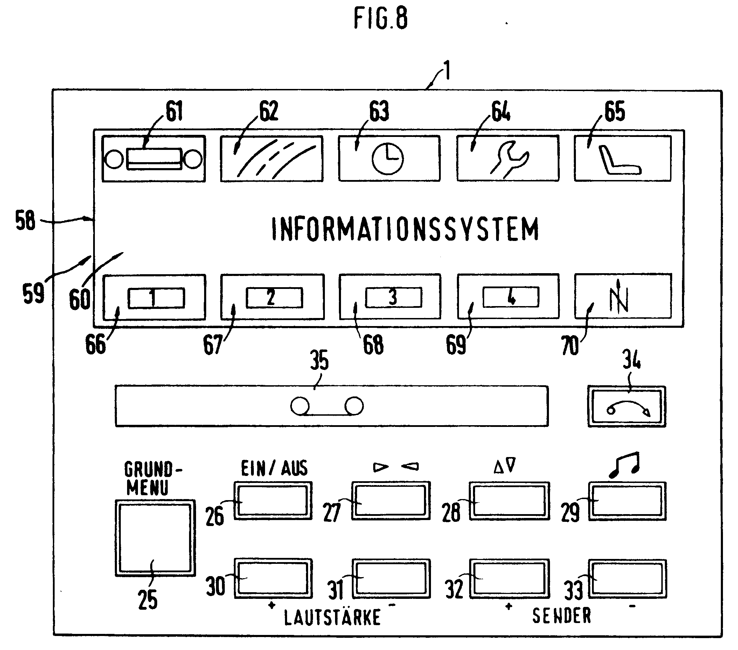

Im Grundmenu nach Fig. 8 ist eine Anzeigefläche 59 des Displays 58 in derselben Weise aufgeteilt, wie die Anzeige 2 in Fig. 3: Sie ist unterteilt in ein Informationsfeld 60 und in Menufelder 61 bis 70, die gleichzeitig als Berührungstasten dienen; die Menufelder 61 bis 70 tragen dieselben Symbole wie diejenigen 46 bis 55 der Menufelder 5 bis 14 der Fig. 3. Im Informationsfeld 60 erscheint derselbe Schriftzug, so daß auf eine erneute Beschreibung der Symbole und der Funktionsweise verzichtet werden kann.

Das berührungsempfindliche Display 58 eröffnet aber noch weitergehende Möglichkeiten. So kann z. B. ein zu bedienendes Gerät mit seinen Bedienungsorganen bildich 'simuliert', d. h., symbolisch dargestellt werden. Ein so aufgebautes 'Menu' weist darüber hinaus erhöhte Flexibilität in der Anzahl der Bedienungstasten auf, es kann zu gewohnten Bedienungsabläufen zurückgekehrt werden.

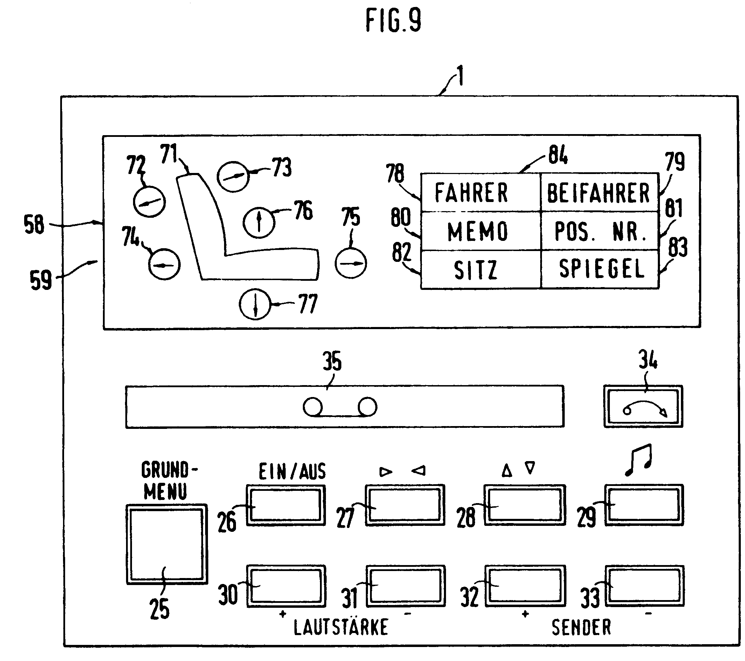

Dies soll nun anhand von Fig. 9 erläutert werden. Abgebildet ist ein Positioniermenu mit einem bildlich dargestellten Fahrzeugsitz 71. Berührungsempfindliche Bedienflächen 72 bis 77 sind, bildlich abgegrenzt und mit Richtungspfeilen versehen, so um den dargestellten Fahrzeugsitz herumgruppiert, daß sie seine Verstellmöglichkeiten andeuten (Rückenlehnenverstellung (Neigung) 72, 73, Sitzlängsverstellung 74, 75, und Sitzhöhenverstellung 76, 77). Mit Menufeldern 78 bis 83 in einem zusätzlichen Bedienfeld 84 kann angewählt werden, ob Fahrer- 78 oder Beifahrersitz 79 verstellt werden soll, ob eine Position abgespeichert werden soll (Memo, 80), welche Sitzpositionierung (POS. Nr., 81) angefahren werden soll, wobei die Positionierungsnummer durch wiederholtes Antippen veränderbar ist, sowie ob Sitze 82 oder Innen- bzw. Außenspiegel 83 positioniert werden sollen. Bei Anwahl des Positioniermenus bzw. beim Berühren des Menufelds 82 erscheint auf der Anzeige - wie gezeigt - der bildlich dargestellte Fahrzeugsitz, während beim Antippen des Menufelds 83 ein - nicht gezeigtes - Spiegelsymbol abgebildet wird.

Die zentrale Bedienungsein- und Informationsausgabe kann ferner mit einem Sprachausgabesystem ausgestattet werden, das bei längerem Betätigen einer Bedientaste deren Funktion vokal erklärt. Es kann dabei evtl. zusätzlich die Funktion ausgelöst werden.

Das komplette System wird somit 'blind' bedienbar, so daß es einen Fahrer minimal vom Verkehrsgeschehen ablenkt.

Ist das Fahrzeug mit einem Diagnosesystem ausgestattet, so kann die Anzeige auch zur Darstellung eines im Fahrzeug aufgetretenen Fehlers bzw. einer geeigneten Warnung (blinkende Anzeige, Sprachausgabe) benutzt werden.

## Patentansprüche

1. Zentrale Bedienungsein- und Informationsausgabe (1) zur Steuerung von mehreren von in ein Fahrzeug eingebauten Zusatzgeräten (42 bis 45) mit einer Anzeigeeinheit (3), deren Anzeige in Felder zur Darstellung von Informationen (4) und Funktionstabellen (Menus) (5 bis 14) untergliederbar ist, sowie mit Bedientasten (15 bis 24), die Elementen (5 bis 14) dargestellter Menus eindeutig zugeordnet sind, wobei die Elemente (5 bis 14) der Menus Funktionen angeben, die durch die jeweiligen Bedientasten (15 bis 24) anregbar sind und einzelne, ein oder mehrere Zusatzgeräte (42 bis 45) bedienende Menus Ober wenigstens ein auf der Anzeige auf Tastendruck darstellbares Grundmenu anwählbar sind, **dadurch gekennzeichnet,** daß die Bedienungseingabe zusätzliche Bedienelemente (25 bis 34) umfaßt die aus der Menutechnik des Systems ausgelagert sind und mit denen ein direkter Zugriff zu bestimmten Grundfunktionen der gesteuerten Zusatzgeräte (42 bis 45) jederzeit und unabhängig vom augenblicklich angewählten Menu gegeben ist, und daß auf der Anzeige wenigstens ein persönliches Menu darstellbar ist, das von einer Bedienperson aus Funktionen anderer Menus individuell zusammenstellbar ist.

2. Zentrale Bedienungsein- und Informationsausgabe nach Anspruch 1, dadurch gekennzeichnet, daß die gesteuerten Zusatzgeräte wenigstens einen Rundfunkempfänger und/oder ein KompaktKassettengerät (35) und/oder einen Kompakt-Diskspieler und/oder einen Bordrechner und/oder ein Diagnosegerät und/oder ein Positioniersteuergerät und/oder eine Diebstahlsicherungsanlage und/oder einen Service-Intervallrechner und/oder ein Navigationsgerät und/oder ein Zeitsteuer- und Zeitanzeigegerät und/oder ein Autotelefon und/oder ein Sprachausgabesystem und/oder ein Klimasteuergerät umfassen.

3. Zentrale Bedienungsein- und Informationsausgabe nach Anspruch 2, dadurch gekennzeichnet, daß sie auf der Basis eines zentralen Steuerrechners (36) (Mikrorechners) aufgebaut ist.

4. Zentrale Bedienungsein- und Informationsausgabe nach Anspruch 3, dadurch gekennzeichnet, daß der zentrale Steuerrechner (36) Aufgaben des Rundfunkempfängers, des Kompakt-Kassettengeräts (35), des Kompakt-Diskspielers, des Bordrechners, des Diagnosegeräts, des Positioniersteuergeräts, der Diebstahlsicherungsanlage, des Service-Intervallrechners, des Navigationsgeräts, des Zeitsteuer- und Zeitanzeigegeräts, des Klimasteuergeräts, des Autotelefons sowie des Sprachausgabesystems wenigstens teilweise mit übernimmt.

5. Zentrale Bedienungsein- und Informationsausgabe nach den Ansprüchen 1 bis 4, dadurch gekennzeichnet, daß die Grundfunktionen die Funktionen Gesamtsystem Ein/Aus (26), Grundmenu (25), Lautstärke (30, 31), Senderverstellung (32, 33), Kassetten- (34) und/oder Diskauswurf und/oder Klangfunktion (29) und/oder Balance (27) und/oder Überblendung (28) und/oder Stummschaltung und/oder Defroststellung umfaßt.

6. Zentrale Bedienungsein- und Informationsausgabe nach Anspruch 4, dadurch gekennzeichnet, daß auf der Anzeige (2) ein Radio-, ein Kompakt-Kassetten-, ein Kompakt-Disk-, ein Fahrdaten-, ein Betriebsdaten-, ein Diagnose-, ein Diebstahlsicherungs-, ein Positionier-, ein Klima-, ein Navigations-, ein Zeit- und ein Telefonmenu darstellbar sind.

7. Zentrale Bedienungsein- bzw. Informationsausgabe nach Anspruch 1, dadurch gekennzeichnet, daß die Bedientasten (15 bis 24) über- bzw. unterhalb der Anzeige (2) angeordnet sind.

8. Zentrale Bedienungsein- bzw. Informationsausgabe nach Anspruch 1, dadurch gekennzeichnet, daß die Bedientasten als Berührungstasten (61 bis 70, 72 bis 83) auf einer Anzeigefläche (59) eines berührungsempfindlichen Displays (58) realisiert sind.

9. Zentrale Bedienungsein- bzw. Informationsausgabe nach Anspruch 1, dadurch gekennzeichnet, daß das auf der Anzeige (2) dargestellte das jeweilige, zu steuernde Zusatzgerät (42 bis 45) mit seinen Bedienungsorganen bildlich simuliert (71 bis 77).

10. Bedienungsein- bzw. Informationsausgabe nach Anspruch 7 bis 9, dadurch gekennzeichnet, daß die Anzeige mit einer Quittierungsanzeige für eine Betätigung einer Bedientaste (15 bis 24) versehen ist.

11. Bedienungsein- bzw. Informationsausgabe nach Anspruch 10, dadurch gekennzeichnet, daß als Quittierungsanzeige nach erfolgter Betätigung einer Bedientaste (15 bis 24) ein auf der Anzeige abgebildetes, zugehöriges Menufeld (5 bis 14) in einem inversen Hell-Dunkel-Kontrast dargestellt wird.

12. Zentrale Bedienungsein- bzw. Informationsausgabe nach Anspruch 11, dadurch gekennzeichnet, daß nach kurzzeitigem Antippen einer Bedientaste die zugehörige, im Menufeld dargestellte Funktion ausgelöst wird und bei längerem Betätigen einer Bedientaste lediglich oder zusätzlich deren Funktion vom Sprachausgabesystem erklärt wird.

13. Zentrale Bedienungsein- bzw. Informationsausgabe nach den Ansprüchen 2 bis 6, wobei der Rundfunkempfänger in an sich bekannter Weise mit einem Verkehrsfunkdekoder mit Bereichs- und Durchsageerkennung sowie mit zwei Empfangsteilen ausgestattet ist, mit denen jeweils eine Frequenz derjenigen Sendeanstalt ermittelbar ist, die ein gewünschtes Programm bestmöglich empfängt und der empfangswürdige Sendeanstalten bzw. - programme eines gerade befahrenen Gebiets einschließlich ihrer derzeit besten Empfangsfrequenzen und Verkehrsfunkkennungen automatisch abspeichert, und daß die Abspeicherung beim ersten Einschalten der Vorrichtung erfolgt und nach einem jeweiligen, augenblicklichen Fahrzeugstandort aktualisiert wird, dadurch gekennzeichnet, daß die empfangswürdigen Sendeanstalten im Radiomenu angezeigt werden.

14. Zentrale Bedienungsein- bzw. Informationsaugabe nach Anspruch 13, dadurch gekennzeichnet, daß die Sendeanstalt, die für Verkehrsfunknachrichten im augenblicklich befahrenen Gebiet oder am Fahrzeugstandpunkt bei Fahrtantritt zuständig ist, jeweils am weitesten links im Radiomenu angezeigt wird.

15. Zentrale Bedienungsein- bzw. Informationsausgabe nach Anspruch 14, dadurch gekennzeichnet, daß die einzelnen Programme einer angezeigten Sendeanstalt durch sequentielles Antippen der zugehörigen Bedientaste (15 bis 24) angewählt werden.

16. Zentrale Bedienungsein- bzw. Informationsausgabe nach Anspruch 15, dadurch gekennzeichnet, daß das zuletzt gewählte Programm einer Sendeanstalt bei Wechsel der Sendeanstalt gespeichert bleibt.

17. Zentrale Bedienungsein- bzw. Informationsausgabe nach Anspruch 2 bis 6, dadurch gekennzeichnet, daß bei Einlegen einer Kompaktkassette jeweils automatisch auf Kassettenwiedergabe umgeschaltet und das Kompakt-Kassetten-Menu angezeigt wird.

18. Zentrale Bedienungsein- bzw. Informationsausgabe nach den Ansprüchen 2 bis 6, dadurch gekennzeichnet, daß bei einem Einlegen einer Kompaktdisk jeweils automatisch auf Kompaktdiskwiedergabe umgeschaltet und das Kompaktdisk-Menu angezeigt wird.

19. Zentrale Bedienungsein- bzw. Informationausgabe nach den Ansprüchen 17 und 18, dadurch gekennzeichnet, daß bei einem Betätigen des Auswurfbedienelements des Kompaktkassetten- (34) bzw. Kompaktdiskgeräts jeweils auf Rundfunkempfang zurückgeschaltet wird.

20. Zentrale Bedienungsein- bzw. Informationsausgabe nach Anspruch 1, dadurch gekennzeichnet, daß ein vom Diagnosegerät festgestellter Fehler an einer Fahrzeugkomponente über die Anzeige (2, 59), vorzugsweise alphanumerisch angezeigt wird.

21. Zentrale Bedienungsein- bzw. Informationsausgabe nach Anspruch 1, dadurch gekennzeichnet, daß die Anzeigeeinheit (2, 58) mittels einer Braun'schen Röhre oder einem Flachdisplay aufgebaut ist.

22. Zentrale Bedienungsein- bzw. Informationsausgabe nach Anspruch 1, dadurch gekennzeichnet, daß die Menufelder in vorzugsweise zehn einzelne Menufelder (5 bis 14, 61 bis 70) unterteilt sind und daß ebensoviele Bedientasten vorhanden sind.

## Claims

1. Central operating input and information output (1) for controlling a plurality of accessory devices (42 to 45) mounted in a vehicle, with a display unit (3) whose display is divisible into panels for the representation of information (4) and function tables (menus) (5 to 14), and also with control keys (15 to 24) which are clearly assigned to components (5 to 14) of displayed menus, wherein the components (5 to 14) of the menus indicate functions which can be activated by the respective control keys (15 to 24), and individual menus which control one or more accessory devices (42 to 45) can be selected via at least one basic menu which can be represented on the display by pressing a key, characterized in that the operating input comprises additional operating components (25 to 34) which are output from the menu technology of the system and which give a direct access to certain basic functions of the controlled accessory devices (42 to 45) at any time and independently of the currently selected menu, and in that on the display at least one personal menu can be shown, which can be individually compiled by an operator from functions of other menus.

2. Central operating input and information output according to Claim 1, characterized in that the controlled accessory devices comprise at least a radio receiver and/or a compact cassette device (35) and/or a compact disc player and/or an on-board computer and/or a diagnostic device and/or a position control device and/or an anti-theft installation and/or a service interval calculator and/or a navigating device and/or a time control and time indicator device and/or a car telephone and/or a speech output system and/or an air-conditioning device.

3. Central operating input and information output according to Claim 2, characterized in that it is constructed on the basis of a central control computer (36) (microcomputer).

4. Central operating input and information output according to Claim 3, characterized in that the central control computer (36) at least partially assumes the functions of the radio receiver, the compact cassette device (35), the compact disc player, the on-board computer, the diagnostic device, the position control device, the anti-theft installation, the service interval calculator, the navigating device, the time control and time indicator device, the air-conditioning device, the car telephone and also the speech output system.

5. Central operating input and information output according to Claims 1 to 4, characterized in that the basic functions comprise the functions of the entire input/output system (26), basic menu (25), volume control (30, 31), transmitter adjustment (32, 33), cassette eject (34) and/or disc eject and/or sound function (29) and/or balance (27) and/or fade-over (28) and/or noise suppression and/or defrost position.

6. Central operating input and information output according to Claim 4, characterized in that the display (2) can represent a radio menu, a compact cassette menu, a compact disc menu, a travel data menu, an operating data menu, a diagnostic menu, an anti-theft menu, a positioning menu, an air-conditioning menu, a navigational menu, a time menu and a telephone menu.

7. Central operating input and/or information output according to Claim 1, characterized in that the control keys (15 to 24) are arranged above and/or below the display (2).

8. Central operating input and/or information output according to Claim 1, characterized in that the control keys are realized as contact keys (61 to 70, 72 to 83) on a display surface (59) of a touch-sensitive display (58).

9. Central operating input and/or information output according to Claim 1, characterized in that the respective menu shown on the display (2) is designed such that it pictorially simulates (71 to 77) the respective accessory device (42 to 45) to be controlled, with its operating elements.

10. Operating input and/or information output according to Claims 7 to 9, characterized in that the display is provided with an acknowledgement display for an actuation of a control key (15 to 24).

11. Operating input and/or information output according to Claim 10, characterized in that, as an acknowledgement display after the actuation of a control key (15 to 24) has been performed, an associated menu panel (5 to 14) imaged on the display is represented in an inverse light/dark contrast.

12. Central operating input and/or information output according to Claim 11, characterized in that after a control key has been touched briefly, the associated function shown in the menu panel is triggered, and its function is explained by the speech output system only or additionally on longer actuation of a control key.

13. Central operating input and/or information output according to Claims 2 to 6, wherein the radio receiver is equipped in a manner known per se with a radiocommunication decoder with range- and broadcasting-recognition means and also with two receiving parts by means of each of which it is possible to determine a frequency of that transmitting station which has optimum reception of a desired programme and automatically stores the transmitting stations and/or programmes worth receiving in an area which has just been traversed, including their current best receiving frequencies and radiocommunication identifications, and in that the storage is effected on first switching on the device and is updated in each case according to the present position of a vehicle, characterized in that the transmitting stations worth receiving are displayed in the radio menu.

14. Central operating input and/or information output according to Claim 13, characterized in that the transmitting station which is in charge of radio traffic messages in the area currently being traversed, or at the vehicle position at the start of the journey, is displayed in each case at the furthest left of the radio menu.

15. Central operating input and/or information output according to Claim 14, characterized in that the individual programmes of a displayed transmitting station are selected by sequential pressing of the associated control key (15 to 24).

16. Central operating input and/or information output according to Claim 15, characterized in that the last selected programme of a transmitting station remains stored when the transmitting station is changed.

17. Central operating input and/or information output according to Claims 2 to 6, characterized in that on inserting a compact cassette, cassette playback is in each case automatically switched on and the compact cassette menu is displayed.

18. Central operating input and/or information output according to Claims 2 to 6, characterized in that on inserting a compact disc, compact disc playback is in each case automatically switched on and the compact disc menu is displayed.

19. Central operating input and/or information output according to Claims 17 and 18, characterized in that on actuating the eject element of the compact cassette device (34) and/or of the compact disc device, the radio reception is switched back on in each case.

20. Central operating input and/or information output according to Claim 1, characterized in that a fault in a vehicle component detected by the diagnostic device is indicated by the display (2, 59), preferably alphanumerically.

21. Central operating input and/or information output according to Claim 1, characterized in that the display unit (2, 58) is constructed of a cathode-ray tube or of a flat display.

22. Central operating input and/or information output according to Claim 1, characterized in that the menu panels are divided into preferably ten individual menu panels (5 to 14, 61 to 70) and in that the same number of control keys are provided.

## Revendications

1. Centrale d'entrée d'instructions et de sortie d'informations (1) pour la commande de plusieurs équipements (42 à 45) d'un véhicule automobile, comportant un afficheur (3) dont l'affichage dans des champs pour la représentation d'informations (4) et de tables de fonctions (menus) (5 à 14), peut être cloisonné, ainsi que des touches de fonction (15 à 24), les éléments (5 à 14) être associés de façon biunivoque aux menus représentés, les éléments (5 à 14) du menu donnant les fonctions activables par chacune des touches de fonction (15 à 24), et des menus individuels sélectionnant un ou plusieurs équipements (42, 45), étant choisis sur au moins un menu de base affichable sur l'écran, par pression des touches,
caractérisée en ce que
l'entrée d'instructions comprend des éléments d'instructions supplémentaires (25 à 34) fournis par la technique des menus du système permettant un accès direct à des fonctions de base, déterminées, des équipements commandés (42 à 45) à tout moment et indépendamment du menu choisi dans l'instant et on peut afficher sur l'écran au moins un menu personnalisé qui peut être ajouté aux fonctions des autres menus individuellement par un utilisateur.

2. Centrale d'entrée d'instructions et de sortie d'informations selon la revendication 1,
caractérisée en ce que
les équipements commandés comprennent : au moins un récepteur radio et/ou un magnétophone à cassettes (35) et/ou un lecteur de disque audionumérique et/ou un ordinateur de bord et/ou un appareil de diagnostic et/ou un appareil de commande de réglage et/ou un dispositif antivol et/ou un calculateur de périodicité de maintenance et/ou un appareil de synchronisation, un appareil d'affichage de l'heure, un téléphone de voiture et/ou un système à réponse vocale, et/ou un climatiseur.

3. Centrale d'entrée d'instructions et de sortie d'informations selon la revendication 2,
caractérisée en ce qu'
elle est construite sur la base d'un ordinateur central (36) (micro-ordinateur).

4. Centrale d'entrée d'instructions et de sortie d'informations selon la revendication 3,
caractérisée en ce que
l'ordinateur de commande central (36) prend en charge partiellement la mise en marche du récepteur radio, du magnétophone à cassette, du lecteur de disques audionumériques, de l'ordinateur de bord, de l'appareil de diagnostic, de l'appareil de commande de position, du système antivol, du calculateur de la périodicité de maintenance, du système de navigation, de l'appareil de synchronisation et d'affichage de l'heure, du climatiseur, du téléphone de voiture ainsi que du système à réponse vocale.

5. Centrale d'entrée d'instructions et de sortie d'informations selon les revendications 1 à 4,
caractérisée en ce que
les fonctions de base comprennent les fonctions système marche-arrêt complètes (26), le menu de base (25), le volume sonore (30, 31), la recherche d'émetteurs (32, 33), le lancement de cassettes audio (34) et/ou de disques et/ou la fonction de volume et/ou de balance (27) et/ou de d'évanouissement (28), le silencieux ou de dégivrage.

6. Centrale d'entrée d'instructions et de sorties d'informations selon la revendication 4,
caractérisée en ce que
l'écran (2) peut représenter un menu de récepteur radio, un magnétophone à cassette, un lecteur de disques audionumériques, des paramètres de conduite, des paramètres de fonctionnement, un appareil de diagnostic, un système antivol, un indicateur de position, d'un climatiseur, un système de navigation, un chronomètre, et un menu de téléphone.

7. Centrale d'entrée d'instructions et de sorties d'informations selon la revendication 1,
caractérisée en ce que
les touches de fonction (15 à 24) sont disposées au-dessus ou en dessous de l'écran (2).

8. Centrale d'entrée d'instructions et de sortie d'informations selon la revendication 1,
caractérisée en ce que
les touches de fonction sont réalisées sous forme de touches tactiles (61 à 70 ; 72 à 83) sur une surface d'affichage (59) d'un écran (58) sensible au toucher.

9. Centrale d'entrée d'instructions et de sortie d'informations selon la revendication 1,
caractérisée en ce que
le menu individuel représenté sur l'écran (2) est réalisé, de telle sorte qu'il simule en image chacun des appareils à commander (42, 45) avec ses organes de commande (71, 77).

10. Centrale d'entrée d'instructions et de sortie d'informations selon les revendications 7 à 9,
caractérisée en ce que
l'écran est muni d'une indication de confirmation pour l'actionnement d'une touche de fonction (15 à 24).

11. Centrale d'entrée d'instructions et de sortie d'informations selon la revendication 10,
caractérisée en ce qu'
on représente comme indication de configuration après actionnement satisfaisant d'une touche de fonction (15 à 24), un champ de menu (5 à 14) correspondant formé sur l'écran, dans un contraste inversé clair-sombre.

12. Centrale d'entrée d'instructions et de sortie d'informations selon la revendication 11,
caractérisée en ce qu'
après l'effleurage de courte durée d'une touche de fonction, la fonction correspondante représentée dans le champ de menu est libérée, et lors d'un effleurage plus long d'une touche de fonction, dont la fonction s'explicite simplement ou additionnellement par le système à réponse vocale.

13. Centrale d'entrée d'instructions et de sortie d'informations selon les revendications 2 à 6,
caractérisée en ce que
le récepteur radio est équipé de manière connue en soi d'un décodeur de radioguidage avec reconnaissance de domaines et d'intercommunication ainsi que de deux éléments de réception, avec lesquels on peut obtenir la fréquence de chaque émetteur qui reçoit au mieux le programme souhaité, et qui de la mémoire des émissions ou des programmes d'un domaine desservi correctement y compris leurs meilleures fréquences d'émission et reconnaissance de station, et en ce que le destockage se produit lors de la première utilisation du dispositif et après chaque actualisation de la position instantanée de la position du véhicule automobile,
caractérisée en ce que
les stations d'émission recevables sont affichées sur le menu radio.

14. Centrale d'entrée d'instructions et de sortie d'informations selon la revendication 13,
caractérisée en ce que
la station émettrice qui est qualifiée pour les informations de radioguidage dans la zone de passage instantanée ou au point d'arrêt du véhicule lors d'une étape, s'affiche le plus à gauche possible dans le menu radio.

15. Centrale d'entrée d'instructions et de sortie d'informations selon la revendication 14,
caractérisée en ce que
le programme individuel d'une station d'émission affichée est choisie par effleurages successifs des touches de fonction correspondantes (15 à 24).

16. Centrale d'entrée d'instructions et de sortie d'informations selon la revendication 15,
caractérisée en ce que
le programme choisi en dernier lieu reste mémorisé lors du changement de station d'émission.

17. Centrale d'entrée d'instructions et de sortie d'informations selon une des revendications 2 à 6,
caractérisée en ce que
lors de la mise en place d'une cassette audio, elle est automatiquement commutée sur le réenroulement de la cassette audio, et le menu des cassettes audio s'affiche.

18. Centrale d'entrée d'instructions et de sortie d'informations selon les revendications 2 à 6,
caractérisée en ce que
lors de l'introduction d'un disque audionumérique, elle est commutée automatiquement sur la remise au début du disque audionumérique et le menu du disque audionumérique s'affiche.

19. Centrale d'entrée d'instructions et de sortie d'informations selon les revendications 17 et 18,
caractérisée en ce que
lors d'un actionnement de l'élément de commande de l'éjection de l'appareil de cassettes audio ou de disques audionumériques (34), elle se recale sur l'émetteur radio.

20. Centrale d'entrée d'instructions et sortie d'informations selon la revendication 1,
caractérisée en ce qu'
un défaut déterminé par l'appareil de diagnostic sur un composant du véhicule automobile s'affiche sur l'écran avantageusement sous forme alphanumérique.

21. Centrale d'entrée d'instructions et de sortie d'informations selon la revendication 1,
caractérisée en ce que
l'ensemble d'affichage (2, 58) est constitué d'un tube de branchement et d'un écran plat.

22. Centrale d'entrée d'instructions et de sortie d'informations selon la revendication 1,
caractérisée en ce que
les champs de menus sont répartis avantageusement en dix menus individuels (5 à 14 ; 61 à 70) et il y a autant de touches de fonction.
